# DEMANDE DE BREVET EUROPEEN

(11) **EP 0 652 552 A1**
(43) Date de publication de la demande: **10.05.1995**
(21) Numéro de dépôt: 94402477.7
(22) Date de dépôt: 03.11.1994
(51) Int. Cl.: G11B 5/60

(54) **Patin de vol multiplot pour enregistrement magnétique**

(30) Priorité: 05.11.1993 FR 9313189
(71) Demandeur: COMMISSARIAT A L'ENERGIE ATOMIQUE, F-75015 Paris (FR); SILMAG S.A., F-38054 Grenoble Cédex 9 (FR)
(72) Inventeur: Lazzari, Jean-Pierre, F-38700 Corenc (FR)
(74) Mandataire: Dubois-Chabert, Guy

(57) **Abrégé**

Le patin de vol de l'invention comprend quatre plots (P1, P2, P3, P4) répartis aux quatre coins du patin. Quatre surpressions et des dépressions sont ainsi créées et réparties sur le patin.

Application à l'enregistrement magnétique.

## Description

### Domaine technique

La présente invention a pour objet un patin de vol multiplot. Elle trouve une application dans la lecture et/ou l'écriture d'informations sur un support magnétique.

### Etat de la technique antérieure

Les dispositifs d'enregistrement magnétique comprennent, de manière très générale, un support d'enregistrement (disque, bande, etc...) et un moyen de lecture et/ou d'écriture constitué d'un patin de vol.

Un patin de vol peut comprendre un ou plusieurs rails en relief. Le patin peut être ainsi à un seul rail, ou à deux rails (selon une structure dite en catamaran) ou à trois rails (selon une structure dite en trimaran).

Ces rails (ou seulement certains de ces rails) sont munis d'une tête de lecture et/ou d'écriture. La surface des rails est tournée vers le support d'enregistrement.

Le patin de vol est fixé sous un bras faisant office de ressort. Ce bras applique au patin une force de quelques grammes qui tend à plaquer le patin sur le support.

Lorsque le support est en déplacement (en rotation s'il s'agit d'un disque) un coussin d'air se trouve créé qui engendre une force de sustentation s'opposant à la force du ressort. Un équilibre s'établit ainsi et le patin vole au-dessus du support.

Deux caractéristiques principales permettent de maîtriser les conditions de vol du patin, à savoir les surpressions et les dépressions produites.

On obtient une surpression en une zone déterminée du patin en usinant un chanfrein, ou une ou plusieurs marches ou décrochements. Cette surpression est généralement produite à l'avant du patin, pour faciliter le décollage du patin. Mais elle peut également être produite sur les côtés du patin, pour le cas où le patin se présenterait de biais par rapport aux filets d'air.

Les documents EP-A-0 543 690 et US-A-4 673 996, US-A-4 870 519, US-A-4 698 708 et FR-A-2 629 247 décrivent largement cette technique.

Pour ce qui est de la dépression, elle peut être obtenue en réalisant un évidement en forme de tuyère, comme décrit dans le document US-A-5 200 868. Cette tuyère est ménagée entre deux rails. L'air qui s'y engouffre voit sa section droite augmenter ce qui crée une dépression.

Le patin monté à l'extrémité du bras-ressort possède une certaine liberté angulaire par rapport au support d'enregistrement. Il est souhaitable que la position du patin soit déterminée par l'ensemble des surpressions et dépressions créées par le vol et non par la position angulaire donnée par le ressort. En d'autres termes, les forces de surpression et de dépression doivent présenter une rigidité dynamique supérieure à la rigidité mécanique du ressort.

Lorsque la taille du patin diminue, les surfaces de vol diminuent également et, avec elles, les forces de sustentation. On est alors obligé de réduire la force du ressort. Il est cependant difficile de trop réduire cette force, qui doit rester supérieure à environ 1,5 g, sinon, sous l'effet d'un choc sur le disque, la tête se décollerait de la surface du disque, puis reviendrait frapper celui-ci, ce qui détériorerait à la fois le disque et le patin.

De plus, du fait de la petite taille du patin, la rigidité dynamique diminue rapidement et il devient vite très difficile de fabriquer des ressorts ayant la souplesse suffisante.

L'invention a pour but de proposer une forme de patin qui produit des surpressions importantes permettant de maintenir une charge de l'ordre de 2 g et de préserver une grande rigidité dynamique, et ce, malgré la petitesse du patin.

### Exposé de l'invention

A cette fin, l'invention prévoit d'utiliser un patin dont la surface de vol comprend quatre plots, disposés à l'avant et à l'arrière du patin, chaque plot présentant un profil apte à créer ses propres surpressions et constituant ainsi un patin à lui seul. Le patin de vol comprend ainsi, en ses quatre coins, quatre petits patins.

Chaque plot peut prendre une grande diversité de formes, selon que son front avant présente un chanfrein, ou une ou plusieurs marches, lesquelles peuvent être soit droite(s) soit en biais.

Pour ce qui est des moyens aptes à créer des dépressions, ils peuvent être situés dans chaque plot, sous forme d'un évidement en forme de tuyère. Mais ils peuvent aussi être formés entre deux plots, (entre les deux plots avant, d'une part, et entre les deux plots arrière, d'autre part). Ces moyens peuvent encore être formés entre les quatre plots.

### Brève description des dessins

- la figure 1 montre schématiquement un patin de vol multiplot selon l'invention, à quatre plots simples,
- la figure 2 montre une simulation de la répartition de la pression sur la surface de vol d'un patin selon la figure 1,
- la figure 3 illustre une variante à quadruple évidement,
- la figure 4 illustre une autre variante à double évidement,
- la figure 5 illustre encore une autre variante, à évidement unique.

### Exposé détaillé de modes de réalisation

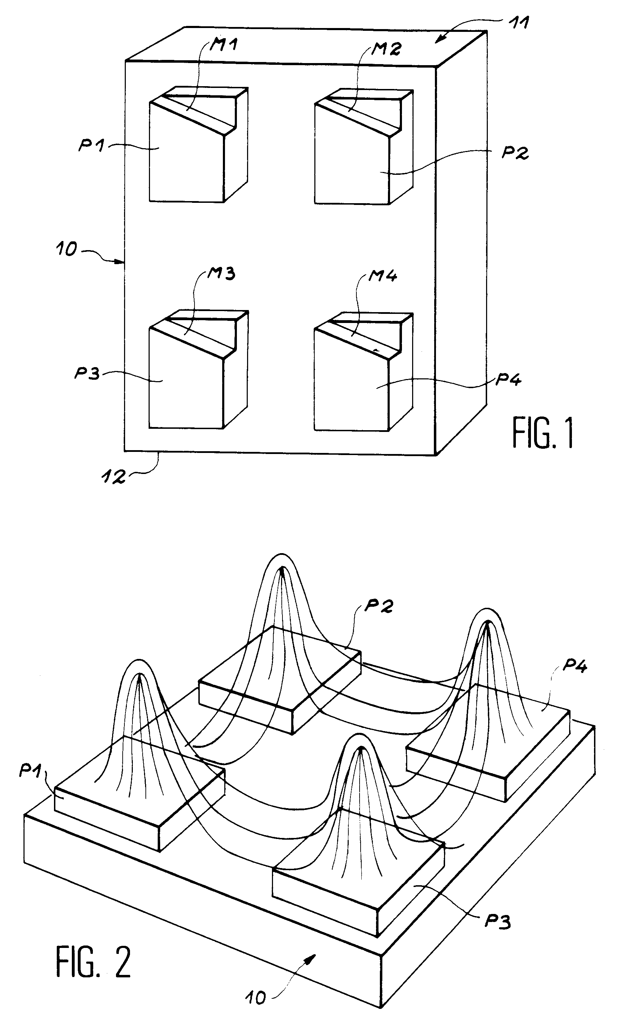

On voit, sur la figure 1, un patin de vol conforme à l'invention. Ce patin comprend un substrat 10, un côté avant 11 et un côté arrière 12. La surface de vol est la surface visible, parallèle au plan de la figure. Cette surface comprend quatre plots P1, P2, P3, P4 placés aux quatre coins du substrat. Deux plots sont donc placés côté avant (P1, P2) et deux autres côté arrière (P3, P4).

Dans la variante illustrée, chacun de ces plots comprend, à l'avant, une marche, respectivement M1, M2, M3, M4. Cette marche est en biais, c'est-à-dire qu'elle n'est pas parallèle aux bords avant et arrière. Mais toute autre forme de marche pourrait être retenue (par exemple droite). Les marches M1, M2 sont de préférence parallèles. De même, les marches M3, M4 sont de préférence parallèles. Dans une variante privilégiée, toutes les marches M1, M2, M3, M4 sont parallèles entre elles.

On pourrait aussi utiliser deux marches au lieu d'une, sur un même plot, par exemple en biais, mais inclinées de manière différente l'une par rapport à l'autre.

Au lieu d'utiliser une marche, on pourrait utiliser un chanfrein.

Le demandeur a réalisé un patin de ce type avec une longueur de 1 mm et une largeur de 0,7 mm. Le patin était soumis à une force de 2 g de la part du ressort et était placé face à un disque de diamètre standard de 4,5 cm (1,8 pouce) animé d'une vitesse linéaire de 6 m/s. Le Demandeur a réalisé également un patin de même dimension mais de profil classique avec deux rails longitudinaux placés de chaque côté du patin, chaque rail ayant, sur le bord avant, une marche en biais. Ce patin classique touchait le disque à l'arrière. Le patin de l'invention présentait au contraire une hauteur de vol de 100 nm.

Une simulation a permis de visualiser la répartition de la pression à travers la surface du patin. La figure 2 montre cette répartition et laisse clairement apparaître les quatre pics de pression, sensiblement de même amplitude, et correspondant aux quatre plots, ainsi que les quatre dépressions qui séparent nettement ces pics, et qui correspondent aux intervalles séparant les plots. Sur la figure 2, les plots P1, P2, P3, P4 sont représentés schématiquement, sans leurs décrochements.

Il est clair, dans ces conditions, que les quatre plots réalisés selon l'invention permettent d'obtenir un vol à haute altitude malgré la petitesse du patin. De plus, la rigidité dynamique du patin est très grande.

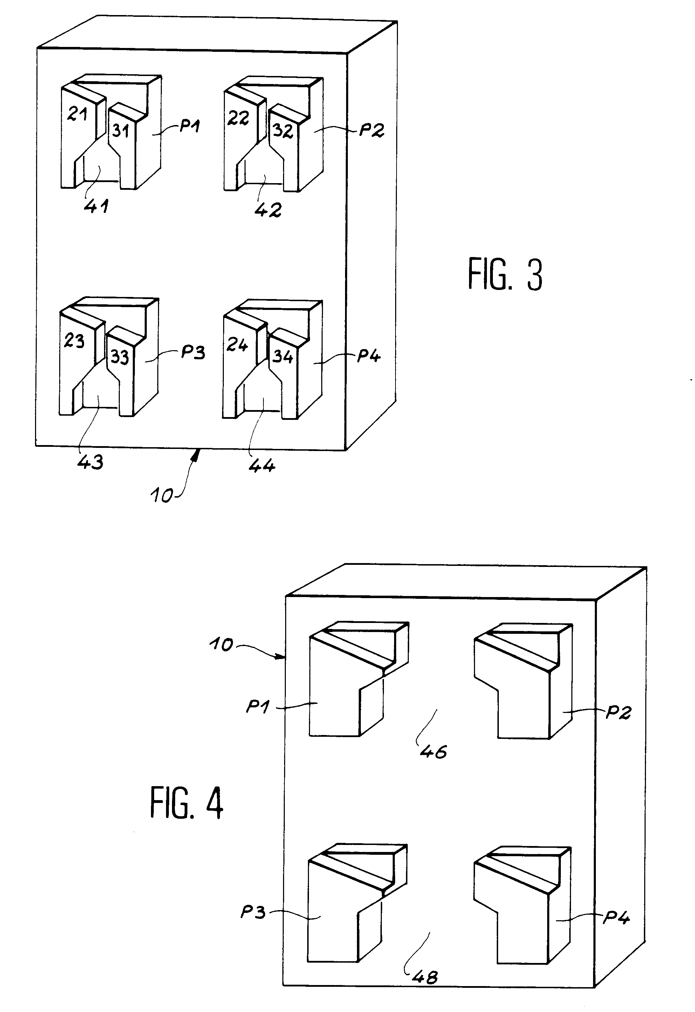

Pour mieux contrôler la hauteur de vol en piste interne et en piste externe du disque d'enregistrement, l'angle d'attaque du patin par rapport au disque ("pitch angle" en anglais) ainsi que l'inclinaison du patin ("roll angle") et pour mieux s'assurer que le point le plus bas du patin se situe là où est placée la tête de lecture, on peut améliorer la tête en adoptant les variantes des figures 3 à 5.

Sur la figure 3, tout d'abord, on voit que chaque plot comprend ses propres moyens de dépression, à savoir un évidement en forme de tuyère. Le plot P1 comprend ainsi deux rails 21, 31 séparés par un évidement 41. L'écartement des rails 21, 31 est plus faible à l'avant du plot qu'à l'arrière, de sorte que se forme naturellement une tuyère pour les filets d'air, ce qui produit une dépression au-dessus du plot.

De même pour le plot P2, qui comprend deux rails 22, 32 et un évidement 42, pour le plot P3 (23, 33, 43) et pour le plot P4 (24, 34, 44).

Ces tuyères de dépression sont peu efficaces à faible vitesse, lorsque la tête est au-dessus d'une piste interne. Mais, en revanche, à plus forte vitesse, au-dessus d'une piste externe, ces tuyères compensent l'augmentation de surpression due à l'augmentation de vitesse.

Par ces moyens, on peut corriger la tendance à l'augmentation de hauteur de vol lorsque l'on passe sur une piste externe. De plus, l'optimisation du vol s'obtient très simplement et très souplement car chaque plot peut être optimisé séparément.

La variante illustrée sur la figure 4 ne présente plus quatre tuyères de dépression mais seulement deux. L'une correspond à un premier évidement 46 séparant les plots avant P1, P2, l'autre à un second évidement 48 séparant les plots arrière P3, P4. Ces tuyères sont obtenues par la forme même donnée aux plots. Il suffit de prévoir des plots dont la largeur à l'avant est plus forte que la largeur à l'arrière.

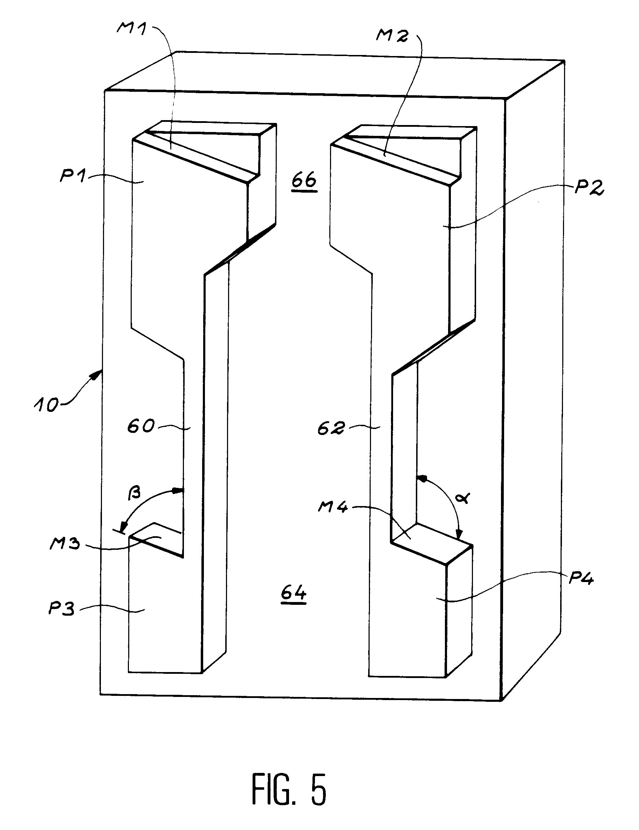

La variante illustrée sur la figure 5 ne comprend plus qu'une seule tuyère de dépression. Dans cette variante, les plots P1, P3 situés sur le côté gauche du patin sont réunis par un rail 60 tandis que les plots P2, P4, situés sur le côté droit du patin, sont réunis par un rail 62. Ces deux rails sont séparés par un certain intervalle 64 qui est choisi plus grand que l'intervalle 66 séparant les deux plots P1, P2 à l'avant. Ces deux écartements constituent donc une tuyère unique pour le patin de vol.

Quelle que soit la variante de l'invention, les deux plots disposés côté arrière présentent au moins une partie M3, M4 sur le bord avant du plot, cette partie recevant le flux d'air. Cette partie, qui, dans les variantes illustrées, est constituée par une marche en biais, fait, avec la direction longitudinale du patin, un angle α pour la marche M4 du bord droit et un angle β pour la marche M3 du bord gauche. Ces deux marches M3 et M4 étant parallèles, on a, bien entendu, α+β=180°. De préférence, l'angle α est compris entre 70° et 180°, bornes exclues. Ces deux marches M3, M4 recevant le flux d'air, participent à la formation de deux surpressions localisées à l'aplomb des marches.

Les têtes qui viennent d'être décrites présentent encore un autre avantage, qui est lié au problème du décollage du patin.

Lorsque le disque d'enregistement est au repos, le patin repose sur le disque. Dès que le disque commence à tourner, le patin, pendant un certain temps, frotte sur le disque. Pendant cette période de frottement, l'énergie absorbée par le moteur de rotation est importante. Dès que le patin a décollé, l'énergie absorbée se réduit à celle des frottements dans les roulements à billes et de l'air autour du disque. Cependant, l'alimentation du moteur doit être prévue pour absorber l'énergie au démarrage. Il est donc très important de faire en sorte que le patin décolle le plus rapidement possible.

Dans l'art antérieur, le décollage se fait de la façon suivante. Au repos, le patin repose sur le disque par la partie centrale des rails, car la surface de vol a été prévue légèrement incurvée avec une convexité tournée vers le disque. Lorsque le disque commence à tourner, il entraîne avec lui un film d'air qui provoque, sur l'avant des skis, une force de sustentation qui soulève le patin à l'avant. Mais l'arrière continue à frotter sur le disque. Afin de décoller rapidement, il convient de donner un couple de décollage à l'avant très fort. Il faut que ce couple de décollage soit supérieur au couple donné par la force d'appui du ressort auquel s'ajoutent les forces engendrées par le frottement à l'arrière du patin, et le couple engendré par la torsion du ressort qui maintient le patin. La forme et les dimensions du chanfrein ou des marches à l'avant, doivent être dimensionnées pour fournir ce couple au décollage. La difficulté vient de ce que, lorsque le patin a décollé, ce couple ne doit pas subsister sinon le patin continuerait de présenter un angle important par rapport au disque ("pitch angle"), ce qui produirait des instabilités de vol.

La présente invention permet de remédier à ces inconvénients dans la mesure où le décollage est différent de celui de l'art antérieur. En effet, les forces de sustentation se développent en même temps à l'avant et à l'arrière du patin du fait du caractère multiplot. De ce fait, le patin décolle quasiment verticalement, en restant parallèle au disque (cf figure 2). Il en résulte les avantages suivants :
- les forces de frottement à l'arrière sont quasiment nulles puisque le patin décolle verticalement,
- les couples engendrés par la torsion du ressort sont également annulées, car l'angle de décollage est très réduit,
- l'énergie absorbée lors du décollage est faible.

## Revendications

1. Patin de vol multiplot pour enregistrement magnétique, ce patin (10) comprenant un bord avant (11) et un bord arrière (12) et une surface de vol, caractérisé par le fait que ladite surface de vol comprend deux plots (P1, P2) disposés côté avant et deux plots (P3, P4) disposés côté arrière, chacun de ces plots présentant un profil de patin de vol.

2. Patin de vol selon la revendication 1, caractérisé par le fait que chaque plot comprend au moins une marche (M1, M2, M3, M4) sur un bord avant.

3. Patin de vol selon la revendication 2, caractérisé par le fait que la marche est en biais.

4. Patin de vol selon la revendication 3, caractérisé par le fait que les deux marches (M1, M2) des deux plots (P1, P2) disposés côté avant sont parallèles.

5. Patin de vol selon la revendication 3, caractérisé par le fait que les deux marches (M3, M4) des deux plots (P3, P4) disposés côté arrière sont parallèles.

6. Patin de vol selon la revendication 3, caractérisé par le fait que les quatre marches (M1, M2, M3, M4) sont parallèles entre elles.

7. Patin de vol selon la revendication 1, caractérisé par le fait que chaque plot comprend un évidement (41, 42, 43, 44) en forme de tuyère.

8. Patin de vol selon la revendication 7, caractérisé par le fait que chaque plot comprend deux rails longitudinaux (21, 31) (22, 32) (23, 33) (24, 34) s'étendant entre un bord avant et un bord arrière, le bord avant de chaque rail présentant au moins une marche (M1, M2, M3, M4), un évidement (41, 42, 43,44) étant prévu entre les deux rails avec une largeur plus faible à l'avant qu'à l'arrière.

9. Patin de vol selon la revendication 1, caractérisé par le fait qu'il comprend un premier évidement (46) en forme de tuyère entre les deux plots côté avant (P1, P2) et un second évidement (48) en forme de tuyère entre les deux plots côté arrière (P3, P4).

10. Patin de vol selon la revendication 9, caractérisé par le fait que chaque plot comprend un relief unique avec une partie avant plus large que la partie arrière, l'écartement entre les deux plots côté avant (P1, P2) et l'écartement entre les deux plots côté arrière (P3, P4) étant plus faible à l'avant des plots qu'à l'arrière.

11. Patin de vol selon la revendication 1, caractérisé par le fait que le plot côté avant (P1) et le plot côté arrière (P3) d'un même premier bord latéral du patin sont réunis par un premier rail (60) et que le plot côté avant (P2) et le plot côté arrière (P4) d'un même second bord latéral sont réunis par un second rail (62), ces deux rails étant séparés l'un de l'autre par un écartement (64) supérieur à l'écartement (66) des deux plots côté avant (P1, P2), la marche (M4) du plot côté arrière (P4) dudit premier bord latéral du patin faisant un angle α avec la direction longitudinale du patin et la marche (M3) du plot côté arrière (P3) dudit second bord latéral faisant un angle β avec la direction longitudinale du patin, avec α+β=180°.

12. Patin de vol selon la revendication 11, caractérisé par le fait que l'angle α est compris entre 70 et 180°.
